# EUROPEAN PATENT APPLICATION

(11) **EP 4 847 236 A1**
(43) Date of publication of application: **02.12.2026**
(21) Application number: 25182640.0
(22) Date of filing: 13.06.2025
(51) Int. Cl.: B29C 65/08, B29C 65/48, B29C 65/50

(54) **METHOD AND DEVICE FOR OPTIMIZING THE CONNECTION BETWEEN A ZIPPER AND A WINDPROOF CURTAIN FABRIC**

(30) Priority: 27.05.2025 CN 202510689648
(71) Applicant: Zhejiang Shuangcheng Intelligent Technology Co., Ltd., Hangzhou City, Zhejiang Province 311107 (CN); Jiangxi WBEST Smart Home Co., LTD, Shangrao City Jiangxi 334202 (CN)
(72) Inventor: FENG, Shaoyue, Hangzhou City, 310004 (CN); WANG, Guibao, Jiaxing City, 314400 (CN); WANG, Jian, Dexing City, 334200 (CN)
(74) Representative: Chung, Hoi Kan

(57) **Abstract**

The present application relates to material joining technologies and discloses a method and device for optimizing the connection between a zipper and a windproof curtain fabric. The method includes acquiring characteristic ambient temperature and ultraviolet intensity in high-altitude environments; using a dynamic adjustment model to calculate optimized ultrasonic welding parameters-comprising welding frequency, pressure, time, and amplitude-based on environmental data; controlling an ultrasonic welding device to weld the zipper base fabric and windproof curtain fabric, with their edge seams aligned and jointly welded to a connection tape; and monitoring welding parameters in real time to adjust the welding process. The method enhances the durability and reliability of the connection under high-altitude conditions in high-rise buildings.

## Description

### TECHNICAL FIELD

The present application relates to the technical field of material connection, and more particularly, to a method and a device for optimizing the connection between a zipper and a windproof curtain fabric.

### BACKGROUND

In commercial buildings, large-scale windproof curtains are often required around glass curtain walls, return corridors, and lobbies for purposes such as shielding, shading, or wind blocking. Windproof curtains are typically housed within a rolling box when in a retracted state, and are deployed by a motor during use. To maintain the stability of the windproof curtain, inner and outer tracks are generally provided at both lateral ends of the curtain. The outer track is vertically fixed to the building, while the inner track slides within the outer track. The inner track is typically made of a flexible and rollable material and is fixed to the windproof curtain via a zipper. In order to ensure that the inner track can be stably and reliably mounted to the windproof curtain, the zipper connection technology is particularly critical.

Especially in high-altitude environments of tall buildings, windproof curtains can effectively resist strong winds, isolate low external temperatures, and block high-intensity ultraviolet (UV) radiation. Firstly, the significant day-night temperature difference in high-altitude environments causes the connection area between the curtain and the zipper to undergo repeated thermal expansion and contraction cycles, accelerating material fatigue and degradation of connection performance. Secondly, the intensity of ultraviolet radiation in tall buildings is extremely high. Prolonged exposure to intense UV rays significantly accelerates the aging of the materials used in the windproof curtain and zipper, reducing their mechanical performance. In addition, the routine rolling and unrolling operations of the curtain further increase mechanical stress impacts on the connection area, making it more susceptible to damage during regular use.

The above-mentioned adverse factors-thermal cycling, UV exposure, and mechanical stress-interact and accumulate in the practical application scenarios of windproof curtains in tall buildings. As a result, conventional connection methods between windproof curtains and zippers tend to experience a significant decline in connection strength over time, and may even suffer from cracking or failure under the combined effects of prolonged UV irradiation, frequent temperature fluctuations, and continuous structural deformation due to daily operation. Therefore, how to effectively improve the durability and reliability of the connection between the zipper and the windproof curtain under such special application scenarios in high-rise buildings has become a critical technical problem that needs to be urgently addressed.

In view of the foregoing issues, improvements in the prior art are urgently needed.

### SUMMARY

The objective of the present application is to provide a method and a device for optimizing the connection between a zipper and a windproof curtain fabric, which has the advantage of enhancing the durability and reliability of the connection under high-altitude environmental conditions in tall buildings.

In a first aspect, the present application provides a method for optimizing the connection between a zipper and a windproof curtain fabric, which is used to improve the connection process between the windproof curtain fabric and the zipper in high-rise building applications. The method comprises the following steps:
A1. Acquiring the characteristic ambient temperature and characteristic ultraviolet (UV) intensity of the high-altitude environment;
A2. Calculating optimized ultrasonic welding process parameters based on the characteristic ambient temperature and characteristic UV intensity by using a dynamic ultrasonic welding parameter adjustment model, wherein the ultrasonic welding process parameters include welding frequency, welding pressure, welding time, and welding amplitude;
A3. Controlling an ultrasonic welding device to perform welding of the zipper base fabric and the windproof curtain fabric according to the optimized ultrasonic welding process parameters, wherein the edges of the zipper base fabric and the windproof curtain fabric are aligned at the seam and jointly welded onto a connection tape;
A4. Monitoring welding process parameters in real time to adjust the ultrasonic welding process parameters.

By acquiring high-altitude environmental parameters and dynamically adjusting ultrasonic welding parameters based on these environmental parameters, the method achieves process optimization and improves the durability and reliability of the connection between the zipper and the windproof curtain fabric under high-altitude conditions.

Preferably, step A1 comprises:
A101, Retrieving historical ambient temperature data and historical UV intensity data of multiple locations from a high-altitude environment database, wherein the locations correspond to the geographic characteristics of the intended deployment site of the curtain; the high-altitude environment database includes historical ambient temperature and UV intensity data of multiple typical tall building locations, along with corresponding geographic attributes;
A102, Calculating statistical characteristic parameters, including the average value, maximum value, and minimum value, of the ambient temperature and UV intensity from the retrieved data;
A103, Performing weighted averaging of each statistical characteristic parameter of ambient temperature from the multiple retrieved locations to obtain first weighted average statistical characteristic parameters; performing weighted averaging of each statistical characteristic parameter of UV intensity from the multiple retrieved locations to obtain second weighted average statistical characteristic parameters;
A104, Synthesizing the first weighted average statistical characteristic parameters to obtain the characteristic ambient temperature; synthesizing the second weighted average statistical characteristic parameters to obtain the characteristic UV intensity.

This approach enables more accurate acquisition of the characteristic ambient temperature and UV intensity, laying a foundation for the optimization of subsequent ultrasonic welding parameters, thereby improving the welding quality and reliability of the connection structure.

Preferably, the dynamic ultrasonic welding parameter adjustment model comprises a material property sub-model, a welding thermodynamic sub-model, and a welding quality evaluation sub-model;
The material property sub-model is configured to calculate the elastic modulus, yield strength, and thermal expansion coefficient of the connection tape, zipper base fabric, and windproof curtain fabric materials under varying ambient temperatures and UV intensities;
The welding thermodynamic sub-model is configured to calculate the temperature distribution and stress distribution in the welding region during the ultrasonic welding process;
The welding quality evaluation sub-model is configured to evaluate the welding strength and uniformity of the welded region.

Preferably, step A2 comprises:
A201, Calculating the elastic modulus, yield strength, and thermal expansion coefficient of the connection tape, the zipper base fabric, and the windproof curtain fabric based on the characteristic ambient temperature and the characteristic ultraviolet intensity, using the material property sub-model;
A202, Using the elastic modulus, yield strength, and thermal expansion coefficient of the connection tape, the zipper base fabric, and the windproof curtain fabric as inputs to the welding thermodynamic sub-model to compute the temperature distribution and stress distribution in the welding region under different combinations of welding frequency, welding pressure, welding time, and welding amplitude;
A203, Using the temperature distribution and stress distribution of the welding region as inputs to the welding quality evaluation sub-model to evaluate the welding strength and welding uniformity under different combinations of welding frequency, welding pressure, welding time, and welding amplitude;
A204, Based on the welding strength and welding uniformity results corresponding to different welding parameter combinations, employing a multi-objective optimization algorithm to determine optimized welding parameters, including optimized welding frequency, optimized welding pressure, optimized welding time, and optimized welding amplitude, with the goal of maximizing welding strength and achieving optimal welding uniformity.

As a result, the ultrasonic welding process parameters are optimized with respect to environmental conditions and welding quality objectives, making the optimization process more specific, operable, and effective, and ensuring the reliability and durability of the connection between the zipper and the windproof curtain fabric under extreme high-altitude conditions of tall buildings.

Preferably, step A204 comprises:
B1, Applying the NSGA-II (Non-dominated Sorting Genetic Algorithm II) algorithm to solve for the Pareto optimal solution set based on welding strength and welding uniformity under different combinations of welding frequency, welding pressure, welding time, and welding amplitude, wherein each solution in the Pareto optimal set corresponds to one combination of welding parameters;
B2, Acquiring the welding strength and welding uniformity corresponding to each solution in the Pareto optimal set, and calculating the corresponding welding strength margin and welding uniformity margin; wherein the welding strength margin is the ratio of the welding strength to a preset welding strength threshold, and the welding uniformity margin is the ratio of the welding uniformity to a preset welding uniformity threshold;
B3, For each solution in the Pareto optimal set, calculating a comprehensive evaluation index by performing a weighted sum of the welding strength margin and the welding uniformity margin;
B4, Selecting the solution with the highest comprehensive evaluation index from the Pareto optimal solution set as the optimized combination of welding frequency, welding pressure, welding time, and welding amplitude.

Preferably, step B1 comprises:
B101, Initializing the population of the NSGA-II algorithm as the initial parent population for different combinations of welding frequency, welding pressure, welding time, and welding amplitude; the population size is set as N, where N is a predefined positive integer;
B102, For each set of welding parameter combinations, using the dynamic ultrasonic welding parameter adjustment model to calculate the corresponding welding strength and welding uniformity, and determining the corresponding fitness value based on the welding strength and welding uniformity;
B103, Performing selection, crossover, and mutation operations based on the fitness values of each set of welding parameters to generate a new population as the offspring population; the selection operation adopts binary tournament selection, the crossover operation adopts simulated binary crossover (SBX), and the mutation operation adopts polynomial mutation. In the mutation operation, the mutation probability is adjusted according to environmental temperature and air pressure, where lower temperature and lower pressure result in higher mutation probability;
B104, Merging the parent and offspring populations, performing non-dominated sorting, calculating the crowding distance for each solution, and selecting the top N solutions as the new parent population based on non-dominated rank and crowding distance;
B105, Determining whether the maximum number of iterations has been reached; if so, outputting the latest parent population as the Pareto optimal solution set; otherwise, returning to step B102.

Preferably, step B104 comprises:
Performing stratification of the merged population based on non-dominated rank to obtain multiple non-dominated levels;
For solutions within the same non-dominated level, calculating the objective differences between each solution and its neighboring solutions, and summing these differences for each solution to obtain the corresponding crowding distance. The objective differences include differences in welding strength and welding uniformity;
Selecting the top N solutions as the new parent population using an elitism strategy based on the non-dominated rank and crowding distance.

Preferably, after step B2 and before step B3, the method further comprises:
B5, Acquiring the temperature distribution and stress distribution of the welding region corresponding to each solution in the Pareto optimal solution set;
B6, Based on the welding strength, welding uniformity, and temperature and stress distributions of the welding region corresponding to each solution in the Pareto optimal solution set, calculating the fatigue life evaluation parameters of the welded structure under specific cyclic loading using Miner's linear cumulative damage theory;
B7, Revising the welding strength margin and welding uniformity margin based on the fatigue life evaluation parameters.

Preferably, step B6 comprises:
B601, Extracting multiple feature points within the welding region based on the temperature and stress distributions corresponding to each solution in the Pareto optimal solution set, and acquiring the stress amplitude and mean stress at each feature point under a specific cyclic loading condition;
B602, Calculating the equivalent stress amplitude for each feature point using a modified Morrow mean stress correction algorithm based on the stress amplitude and mean stress;
B603, Referring to the S-N curves of the materials of the connection tape, the zipper base fabric, and the windproof curtain fabric to determine the corresponding fatigue life based on the equivalent stress amplitude;
B604, Calculating a damage index for each feature point using Miner's linear cumulative damage theory, wherein the damage index is defined as the ratio of the number of cycles under the specific cyclic load to the fatigue life;
B605, Calculating a fatigue life evaluation parameter of the welded structure by performing a weighted average of the damage indices of all feature points, wherein the weight coefficient is inversely proportional to the distance from each feature point to the center of the welding region.

Preferably, step A4 comprises:
A401, Acquiring and storing in real time the welding current, welding voltage, welding power, and vibration amplitude of the welding horn from the ultrasonic welding equipment;
A402, Calculating the energy input curve during the welding process based on the stored welding current, welding voltage, welding power, and vibration amplitude data;
A403, Comparing the energy input curve with a preset threshold range of the energy input curve to determine whether the welding process is stable;
A404. If the welding process is unstable, adjusting the welding frequency, welding pressure, welding time, and welding amplitude of the ultrasonic welding equipment using a PID control algorithm based on the deviation of the energy input curve from the preset threshold range, such that the energy input curve is restored to within the preset threshold range.

In a second aspect, the present application provides a device for optimizing the connection between a zipper and a windproof curtain fabric, which is used to improve the connection process between the windproof curtain fabric and the zipper in high-rise building applications. The device comprises:
an environmental parameter acquisition module, configured to acquire the characteristic ambient temperature and characteristic ultraviolet (UV) intensity of a high-altitude environment;
a welding parameter calculation module, configured to calculate optimized ultrasonic welding process parameters using a dynamic ultrasonic welding parameter adjustment model based on the characteristic ambient temperature and characteristic UV intensity, wherein the ultrasonic welding process parameters include welding frequency, welding pressure, welding time, and welding amplitude;
a welding control module, configured to control an ultrasonic welding device to perform welding of the zipper base fabric and the windproof curtain fabric according to the optimized ultrasonic welding process parameters, wherein the edges of the zipper base fabric and the windproof curtain fabric are aligned at the seam and jointly welded onto a connection tape;
a welding quality monitoring module, configured to monitor welding process parameters in real time for adjusting the ultrasonic welding process parameters.

The beneficial effects are as follows: the method and device for optimizing the connection between a zipper and a windproof curtain fabric provided in the present application achieve process optimization by acquiring environmental parameters in high-altitude conditions of tall buildings and dynamically adjusting ultrasonic welding parameters based on the environmental data. This approach enhances the durability and reliability of the connection between the zipper and the windproof curtain fabric under high-altitude environmental conditions.

### BRIEF DESCRIPTION OF DRAWINGS

Fig. 1 is a flowchart of the method for optimizing the connection between a zipper and a windproof curtain fabric according to an embodiment of the present application.
Fig. 2 is a schematic diagram of the device for optimizing the connection between a zipper and a windproof curtain fabric according to an embodiment of the present application.

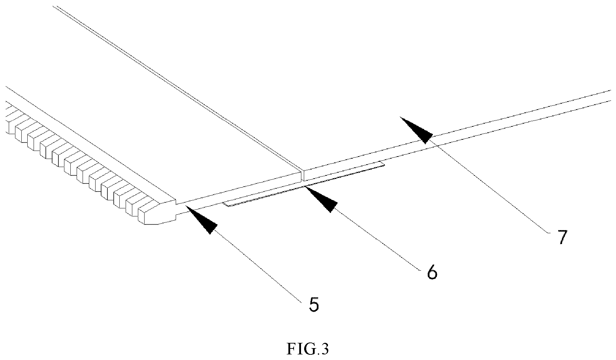

Fig. 3 is a structural diagram of the connection between the zipper and the windproof curtain fabric according to an embodiment of the present application.

Reference Numerals: 1 - Environmental parameter acquisition module; 2 - Welding parameter calculation module; 3 - Welding control module; 4 - Welding quality monitoring module; 5 - Zipper; 6 - Connection tape; 7 - Windproof curtain fabric.

### DETAILED DESCRIPTION

The technical solutions of the present application will now be clearly and completely described in conjunction with the accompanying drawings. It should be understood that the described embodiments are merely a portion of the embodiments of the present application, and not all embodiments. The components of the present application as generally illustrated and described in the drawings herein can be arranged and designed in a wide variety of different configurations. Therefore, the following detailed description of the embodiments provided in the drawings is not intended to limit the scope of the present application, but merely represents selected examples of the present application. All other embodiments obtained by those skilled in the art based on the disclosed embodiments without creative efforts shall fall within the scope of protection of the present application.

It should be noted that similar reference numerals and letters denote similar elements in the drawings below. Therefore, once a particular element is defined in one figure, further definition and explanation are not repeated in subsequent figures. Additionally, in the present description, the terms "first," "second," etc., are used solely for the purpose of distinguishing elements and should not be construed to imply any particular order or importance.

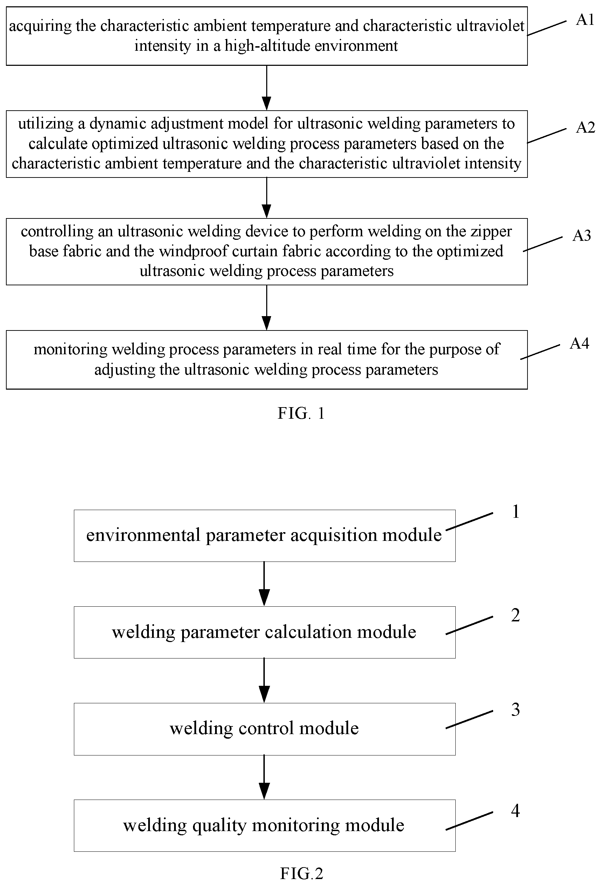

Referring to Fig. 1, the present application provides a method for optimizing the connection between a zipper and a windproof curtain fabric, which is used to improve the connection process in high-rise building applications. The method comprises the following steps:
A1. Acquiring characteristic ambient temperature and characteristic ultraviolet (UV) intensity of the high-altitude environment of a high-rise building;
A2. Using a dynamic ultrasonic welding parameter adjustment model to calculate optimized ultrasonic welding process parameters based on the characteristic ambient temperature and UV intensity, wherein the ultrasonic welding parameters include welding frequency, welding pressure, welding time, and welding amplitude;
A3. Controlling an ultrasonic welding device to perform welding of the zipper base fabric 5 and the windproof curtain fabric 7 according to the optimized ultrasonic welding parameters, wherein the edges of the zipper base fabric 5 and the windproof curtain fabric 7 are aligned and jointly welded onto the connection tape 6; and
A4. Monitoring welding process parameters in real time to adjust the ultrasonic welding process parameters.

In step A1, the characteristic ambient temperature and characteristic UV intensity are representative parameters of the high-altitude environment. They directly influence material properties and welding quality, and their acquisition serves as the basis for subsequent process optimization.

In step A2, the dynamic ultrasonic welding parameter adjustment model is the core of the method. It calculates the optimal parameter combination adapted to current environmental conditions based on the parameters acquired in step A1. The model may include a material property sub-model, a welding thermodynamic sub-model, and a welding quality evaluation sub-model, which are used to analyze material properties, thermodynamic behavior during welding, and welding quality, respectively.

In step A3, the ultrasonic welding device is controlled to execute welding based on the optimized parameters calculated in step A2, thereby achieving the connection between the zipper base fabric 5 and the windproof curtain fabric 7 via the connection tape 6.

In step A4, the real-time monitoring of welding current, voltage, power, or vibration amplitude of the welding horn enables the detection of welding abnormalities. The welding parameters can then be adjusted accordingly to maintain process stability.

Specifically, to address the technical problem of insufficient connection strength between the windproof curtain fabric and the zipper under high-altitude environmental conditions in tall buildings, the present application proposes an optimization method. First, the characteristic ambient temperature and UV intensity at the intended deployment location of the curtain are acquired. These environmental parameters are used as input to the dynamic ultrasonic welding parameter adjustment model. The model then calculates the optimized ultrasonic welding process parameters, including welding frequency, pressure, time, and amplitude. Subsequently, the ultrasonic welding equipment is controlled to weld the connection tape 6, the zipper base fabric 5, and the windproof curtain fabric 7 using the optimized parameters. During welding, parameters such as current and voltage are monitored in real time and compared with preset threshold ranges. If a deviation occurs-such as unstable energy input-a PID control algorithm or similar approach is used to adjust parameters like welding frequency and pressure to restore stability and ensure welding quality. In this way, a reliable connection between the zipper and the windproof curtain fabric can be achieved under high-altitude conditions, enhancing the overall performance of the curtain system.

In some embodiments, step A1 comprises:
A101. Retrieving historical ambient temperature data and historical ultraviolet (UV) intensity data of multiple locations that match the geographic characteristics of the target deployment site of the curtain, from a high-altitude environment database; the high-altitude environment database includes historical ambient temperature data and UV intensity data of multiple typical tall building locations, as well as corresponding geographic characteristics;
A102. Performing statistical analysis on the historical ambient temperature data and historical UV intensity data of the retrieved locations to compute statistical characteristic parameters for ambient temperature and UV intensity, respectively; the statistical characteristic parameters include average value, maximum value, and minimum value;
A103. Performing weighted averaging of each statistical characteristic parameter of ambient temperature for the retrieved locations to obtain the corresponding first set of weighted average statistical characteristic parameters; performing weighted averaging of each statistical characteristic parameter of UV intensity for the retrieved locations to obtain the corresponding second set of weighted average statistical characteristic parameters; and
A104. Synthesizing the first set of weighted average statistical characteristic parameters to obtain the characteristic ambient temperature; synthesizing the second set of weighted average statistical characteristic parameters to obtain the characteristic ultraviolet intensity.

In step A101, the geographic characteristics may include all or part of the following: longitude, latitude, altitude, and climate type. The high-altitude environment database is pre-established to store and manage environmental data for tall buildings. The data in the database may originate from long-term meteorological observations, satellite remote sensing data, or field measurements. The retrieval process involves first determining the geographic characteristics of the target deployment site and then comparing these characteristics with those of the locations in the database to identify multiple locations whose geographic similarity meets a preset threshold.

In step A102, for each retrieved location, the historical ambient temperature data and UV intensity data are statistically analyzed. For example, the average value of historical temperature data is calculated to represent the typical temperature level of the location, and the maximum and minimum values are calculated to reflect the range of temperature variation.

In step A103, weighted averaging is applied to comprehensively consider environmental data from multiple similar locations and enhance the representativeness of the resulting characteristic environmental parameters. The weighting coefficients may be determined based on the geographic similarity between each retrieved location and the target deployment site; the higher the similarity, the larger the weighting coefficient. For example, a Gaussian weighting function or inverse distance weighting method may be used to determine the weights.

In step A104, the characteristic ambient temperature is obtained by synthesizing the first set of weighted average statistical parameters. One implementation approach is to calculate the difference between the maximum and minimum values of the first set as the maximum temperature variation, and then compute a weighted sum of the average value and the maximum variation to obtain the characteristic ambient temperature. Similarly, the characteristic UV intensity is obtained by calculating the difference between the maximum and minimum values of the second set as the maximum intensity variation, and then computing a weighted sum of the average value and the maximum variation.

Specifically, through step A101, historical environmental data of multiple locations with geographic characteristics matching those of the target deployment site can be effectively retrieved from the high-altitude environment database, ensuring relevance and specificity of the environmental data. Through step A102, statistical characteristic parameters for ambient temperature and UV intensity are derived from comprehensive environmental information, enhancing the accuracy of environmental characterization. Through step A103, weighting based on geographic correlation allows the final environmental parameters to better reflect the actual conditions of the deployment site. Finally, step A104 provides characteristic ambient temperature and UV intensity that accurately represent the environmental features of the target site, thereby offering more precise input for the subsequent optimization of ultrasonic welding parameters and ultimately improving welding quality and connection reliability.

In some embodiments, the dynamic ultrasonic welding parameter adjustment model includes a material property sub-model, a welding thermodynamic sub-model, and a welding quality evaluation sub-model. The material property sub-model is configured to calculate the elastic modulus, yield strength, and thermal expansion coefficient of the materials of the connection tape 6, the zipper base fabric 5, and the windproof curtain fabric 7 under different ambient temperatures and UV intensities. The welding thermodynamic sub-model is configured to compute the temperature distribution and stress distribution within the welding region during the ultrasonic welding process. The welding quality evaluation sub-model is configured to evaluate the welding strength and welding uniformity of the welding region.

Step A2 comprises:
A201. Based on the characteristic ambient temperature and the characteristic UV intensity, the material property sub-model is used to calculate the elastic modulus, yield strength, and thermal expansion coefficient of the connection tape 6, zipper base fabric 5, and windproof curtain fabric 7;
A202. The calculated material parameters (elastic modulus, yield strength, and thermal expansion coefficient) are input into the welding thermodynamic sub-model to simulate the welding process and compute the temperature and stress distributions in the welding region under different combinations of welding frequency, welding pressure, welding time, and welding amplitude;
A203. The welding quality evaluation sub-model receives the temperature and stress distribution results from the welding thermodynamic sub-model and evaluates the welding strength and welding uniformity for the different welding parameter combinations;
A204. Based on the calculated welding strength and welding uniformity for the different parameter combinations, a multi-objective optimization algorithm is used to determine the optimized welding frequency, welding pressure, welding time, and welding amplitude, with the objectives of maximizing welding strength and optimizing welding uniformity.

The material property sub-model, welding thermodynamic sub-model, and welding quality evaluation sub-model are integrated within the dynamic ultrasonic welding parameter adjustment model to enable dynamic optimization of the welding parameters. Specifically, the material property sub-model quantitatively analyzes the influence of high-altitude environmental factors in tall buildings on the material properties, thereby providing accurate material input parameters for subsequent welding process optimization. The welding thermodynamic sub-model simulates the thermodynamic behavior during the ultrasonic welding process, predicting temperature and stress distributions in the welding zone under different parameter sets. The welding quality evaluation sub-model quantitatively evaluates welding quality under varying parameters, thereby establishing the relationship between welding parameters and quality.

**In** detail, the dynamic ultrasonic welding parameter adjustment model first uses the material property sub-model to analyze how the characteristic ambient temperature and UV intensity in high-altitude environments affect the materials of the connection tape 6, zipper base fabric 5, and windproof curtain fabric 7, and calculates the relevant parameters such as elastic modulus, yield strength, and thermal expansion coefficient under specific conditions. These parameters are then input into the welding thermodynamic sub-model to simulate the ultrasonic welding process and calculate the temperature and stress distribution for each combination of welding frequency, pressure, time, and amplitude. Subsequently, the welding quality evaluation sub-model takes the thermodynamic simulation output and evaluates the welding strength and uniformity for each parameter combination. Finally, based on these evaluations, a multi-objective optimization algorithm is applied to determine the optimal welding parameters that maximize strength and ensure uniformity.

Through the coordinated operation of the three sub-models, the dynamic ultrasonic welding parameter adjustment model enables environment-driven, quality-targeted optimization of ultrasonic welding parameters. This makes the optimization process more concrete, operable, and effective, ensuring the reliability and durability of the connection between the zipper and the windproof curtain fabric under extreme high-altitude conditions.

In some specific embodiments, the material property sub-model may be constructed by combining experimental testing with finite element simulation. For example, mechanical property parameters of the connection tape 6, zipper base fabric 5, and windproof curtain fabric 7 under different environmental conditions-such as high temperature, low temperature, and ultraviolet irradiation-can be obtained through environmental simulation experiments, thereby establishing a material property database. At the same time, finite element software may be used to develop predictive models of material properties to enable rapid computation of material parameters.

The welding thermodynamic sub-model may be constructed using finite element analysis methods. For instance, thermal-mechanical coupling analysis models of the ultrasonic welding process may be established using finite element software to simulate physical processes such as vibration of the welding horn, frictional heating, heat conduction, and material deformation, thereby calculating the temperature field and stress field distributions in the welding region.

The welding quality evaluation sub-model may be composed of a welding strength prediction model and a welding uniformity evaluation model. For example, the welding strength prediction model may estimate the strength of the welded joint based on the temperature and stress field distributions in the welding region combined with material strength theory. The welding uniformity evaluation model may evaluate the quality by calculating uniformity coefficients of the temperature and stress field distributions within the welding zone.

In some preferred embodiments, step A204 comprises:
B1. Solving for the Pareto optimal solution set using the NSGA-II (Non-dominated Sorting Genetic Algorithm II) based on welding strength and welding uniformity under different combinations of welding frequency, welding pressure, welding time, and welding amplitude; each solution in the Pareto optimal set corresponds to one combination of these parameters;
B2. Obtaining the welding strength and welding uniformity corresponding to each solution in the Pareto optimal set to calculate the corresponding welding strength margin and welding uniformity margin; the welding strength margin is the ratio of the welding strength to a predefined strength threshold, and the welding uniformity margin is the ratio of the welding uniformity to a predefined uniformity threshold;
B3. Calculating a comprehensive evaluation index for each solution in the Pareto optimal set by performing a weighted summation of the welding strength margin and welding uniformity margin;
B4. Selecting the solution with the highest comprehensive evaluation index from the Pareto optimal set as the optimized combination of welding frequency, welding pressure, welding time, and welding amplitude.

In the method of optimizing welding parameters, the NSGA-II algorithm adopted in step B1 is used to solve for the Pareto optimal solution set, which represents the best trade-off solutions between welding strength and welding uniformity. Each solution is a non-dominated solution, meaning no other solution can improve both strength and uniformity simultaneously.

In step B2, the welding strength margin and welding uniformity margin are computed to evaluate how much the welding strength and uniformity exceed their respective threshold values, thereby reflecting the safety level of the solution. The greater the margin, the more reliable the welding quality.

In step B3, these two margins are integrated into a single comprehensive evaluation index through a weighted sum, where the weighting coefficients can be adjusted according to the relative importance of welding strength and uniformity in the actual application.

In step B4, the solution with the maximum comprehensive evaluation index is selected as the optimized welding parameter combination.

Specifically, for the optimization and selection of welding parameters, the NSGA-II algorithm is first employed to perform multi-objective optimization of welding strength and welding uniformity under various combinations of welding parameters. As a result, a Pareto optimal solution set is obtained. For each solution in the Pareto optimal set, the welding strength margin and welding uniformity margin are calculated. The welding strength margin is determined by comparing the welding strength with a predefined strength threshold, and the welding uniformity margin is determined by comparing the welding uniformity with a predefined uniformity threshold. Subsequently, for each solution, the welding strength margin and welding uniformity margin are weighted and summed to obtain a comprehensive evaluation index. The weighting coefficients reflect the relative importance of welding strength and welding uniformity. Finally, the solution with the highest comprehensive evaluation index within the Pareto optimal set is selected, and the corresponding welding frequency, welding pressure, welding time, and welding amplitude are determined as the optimized welding parameters. This method achieves an optimal balance between welding strength and welding uniformity.

In some possible embodiments, step B1 comprises:
B101. Initializing the population of the NSGA-II algorithm based on different combinations of welding frequency, welding pressure, welding time, and welding amplitude, to form the initial parent population. The population size is set as N, where N is a predefined positive integer;
B102. For each combination of welding parameters, using the dynamic ultrasonic welding parameter adjustment model to calculate the corresponding welding strength and welding uniformity, and determining the fitness value based on these metrics;
B103. Performing selection, crossover, and mutation operations based on the fitness values to generate a new population as the offspring population. Binary tournament selection is used for selection; simulated binary crossover (SBX) is used for crossover; polynomial mutation is used for mutation. The mutation probability is dynamically adjusted according to environmental temperature and air pressure-lower temperature and lower pressure result in higher mutation probability;
B104. Merging the parent and offspring populations, performing non-dominated sorting, calculating the crowding distance for each solution, and selecting the top N solutions as the new parent population based on rank and crowding distance;
B105. Determining whether the maximum number of iterations has been reached. If so, outputting the latest parent population as the Pareto optimal solution set; otherwise, returning to step B102.

In step B101, to initiate the NSGA-II algorithm, an initial parent population must first be generated. This can be done by randomly generating multiple combinations of welding parameters (welding frequency, welding pressure, welding time, and welding amplitude) within their respective value ranges. These combinations serve as individuals in the initial population. The population size N may be set based on the available computational resources and the desired optimization precision (e.g., N can be set to 100 or 200).

In step B102, for each welding parameter combination in the initial population, the dynamic ultrasonic welding parameter adjustment model is used to compute the predicted welding strength and welding uniformity. These two metrics are critical indicators for evaluating welding quality. Once calculated, they serve as the basis for evaluating the quality of each parameter combination. The fitness value, a key driver in the NSGA-II optimization process, may be computed in various ways-for instance, by calculating a weighted sum of welding strength and welding uniformity, or by treating them as two independent objective functions.

In step B103, based on the fitness values obtained, selection, crossover, and mutation operations are performed to generate a new offspring population. The selection operation aims to select high-quality individuals from the parent population to inherit into the offspring population. Binary tournament selection is a common method, where two individuals are randomly selected and the one with the better fitness is retained. The crossover operation aims to combine features of different individuals in the parent population to generate new individuals, simulating the biological process of gene recombination. Simulated binary crossover is a commonly used method for this purpose. The mutation operation introduces new genetic information by randomly altering some gene values of individuals, maintaining population diversity and avoiding premature convergence to local optima. Polynomial mutation is a widely adopted approach that perturbs genes based on a polynomial distribution.

Importantly, in the mutation operation, the mutation probability is dynamically adjusted according to the environmental temperature and air pressure of the processing site (these values can be measured in real time). In lower temperature and lower pressure conditions, the uncertainty in the welding process increases. Therefore, by increasing the mutation probability under such conditions, the global search capability of the algorithm is enhanced, enabling it to better adapt to the specific challenges posed by high-altitude environments in tall buildings.

In step B104, after generating the offspring population, the parent and offspring populations are merged, and superior individuals are selected to form a new parent population for the next iteration. Non-dominated sorting is a common method in multi-objective optimization used to rank solutions based on dominance relationships. The population is stratified into different non-dominated levels, where individuals in a lower (better) rank are considered superior to those in higher ranks.

Crowding distance is used to measure the density of solutions in the objective space and helps maintain population diversity, thereby preventing premature convergence. Specifically, for individuals within the same non-dominated rank, the distance in objective space between each individual and its neighbors is calculated. The larger the distance, the higher the crowding distance. During selection of the new parent population, individuals with lower non-dominated ranks are prioritized. Among individuals of the same rank, those with larger crowding distances are preferred. The combination of non-dominated sorting and crowding distance ensures that the new parent population continues to evolve toward the Pareto optimal front.

In step B105, the maximum number of iterations can be predefined based on actual optimization requirements and available computational resources-for example, it may be set to 100 or 200 iterations. Once the maximum iteration count is reached, the algorithm is considered to have converged. The latest parent population is then output as the Pareto optimal solution set, which contains multiple optimized combinations of welding parameters. Each solution represents a trade-off where both welding strength and welding uniformity are relatively optimal. If the maximum iteration count has not been reached, the process returns to step B102 and continues iterating until the stopping condition is satisfied.

With the above technical solution, the present application employs the NSGA-II algorithm as defined in step B1 to optimize ultrasonic welding parameters under the characteristic ambient temperature and ultraviolet intensity typical of high-altitude environments in tall buildings. This enables more effective discovery of welding parameter combinations that optimize both welding strength and uniformity, thereby improving the welding quality between the windproof curtain and the zipper base fabric in such challenging environments.

In some possible embodiments, step B104 comprises:
Performing stratification of the merged population based on non-dominated rank to generate multiple non-dominated levels;
For individuals within the same non-dominated level, calculating the objective differences between each solution and its neighboring solutions. The sum of these differences is taken as the crowding distance for each solution; the objective differences include differences in welding strength and welding uniformity;
Selecting the top N solutions as the new parent population based on both non-dominated rank and crowding distance, using an elitism strategy.

In this context, stratification based on non-dominated rank refers to ranking the merged population to distinguish solution quality. A fast non-dominated sorting algorithm may be used, which compares dominance relationships among individuals and assigns them to different ranks. Solutions with higher ranks (i.e., fewer solutions dominating them) are prioritized, improving overall population quality.

For solutions within the same non-dominated rank, the objective differences between each solution and its neighboring solutions are calculated. The sum of these differences is taken as the crowding distance of the corresponding solution. The objective differences include differences in welding strength and welding uniformity. Specifically, after the population has been stratified into non-dominated levels, the crowding distance is calculated for solutions within the same rank to measure the distribution sparsity of each solution in the objective space. The crowding distance is obtained by summing the differences in each objective dimension-namely, welding strength and welding uniformity-between a given solution and its adjacent neighbors. A larger crowding distance indicates that the solution is located in a more sparsely populated region of the objective space. By calculating the crowding distance in this way, the algorithm is able to maintain population diversity and avoid premature convergence to a local optimum.

According to the non-dominated rank and the crowding distance, an elitism strategy is adopted to select the top N solutions as the new parent population. This means that, after completing the non-dominated sorting and the crowding distance calculation, the non-dominated rank and the crowding distance are combined to select high-quality solutions from the merged population as the new parent population for the next iteration. Specifically, the elitism strategy refers to giving priority to the selection of solutions with higher non-dominated ranks (i.e., lower rank values). For solutions within the same non-dominated rank, those with larger crowding distances are selected. By adopting the elitism strategy, it is ensured that superior solutions can be preserved and inherited into the next generation, while also maintaining population diversity, thereby improving the performance and global search capability of the optimization algorithm.

Through the above technical solution, the present application enables more efficient non-dominated sorting and reasonable calculation of crowding distance, thereby allowing better solutions to be selected as the new parent population. As a result, the multi-objective optimization algorithm is able to more effectively find a global optimum or near-global optimum, leading to better combinations of welding frequency, welding pressure, welding time, and welding amplitude, and ultimately improving both welding strength and welding uniformity.

Preferably, after step B2 and before step B3, the method further comprises the following steps:
B5. Obtaining the temperature distribution and stress distribution of the welding region corresponding to each solution in the Pareto optimal solution set;
B6. Based on the welding strength and welding uniformity of each solution in the Pareto optimal solution set, as well as the temperature and stress distributions obtained in step B5, calculating the fatigue life evaluation parameter of the welded structure under specific cyclic loading conditions by using Miner's linear cumulative damage theory; and
B7. Revising the welding strength margin and welding uniformity margin based on the fatigue life evaluation parameter.

In step B5, for each combination of welding parameters, the temperature distribution and stress distribution of the welding region may be calculated using the welding thermodynamic sub-model.

In step B6, Miner's linear cumulative damage theory is a method used to evaluate the fatigue life of materials under variable amplitude cyclic loads. The theory assumes that the damage caused by each cycle is linearly cumulative, and fatigue failure occurs when the total damage reaches a certain level. In this application, the first step is to determine the specific cyclic load spectrum that the welded structure may be subjected to in actual use. For example, the zipper connection area of the windproof curtain in a high-rise building may experience cyclic tensile loads caused by wind forces or manual operations.

Then, based on the stress distribution in the welding region, the stress amplitude and mean stress at different locations within the welding region under the action of cyclic loading can be analyzed. Combined with the S-N curve (stress-life curve) of the material, the fatigue life of the material under different stress levels can be evaluated. Finally, based on Miner's theory, the damage under different stress levels is accumulated to obtain the fatigue life evaluation parameter of the welded structure. The fatigue life evaluation parameter may take various forms, such as the number of fatigue life cycles, fatigue damage index, etc., which characterize the fatigue resistance capability of the welded structure.

In step B7, the fatigue life evaluation parameter obtained in step B6 is used to revise the welding strength margin and welding uniformity margin. The specific revision method may be as follows: if the fatigue life evaluation parameter indicates that the welded structure has a longer fatigue life, the values of the welding strength margin and the welding uniformity margin may be appropriately increased; conversely, if the fatigue life is shorter, the margins may be reduced.

Through this revision using fatigue life evaluation, the calculation of the comprehensive evaluation index can take into account not only the static strength and welding uniformity of the joint, but also its fatigue life, thus providing a more comprehensive assessment of welding quality. For example, let M₁ and M₂ denote the original welding strength margin and welding uniformity margin, respectively. The revised margins are denoted as: M'_1=M_1*(1+k*D) and M'_2=M_2*(1+k*D_2), where M'_1 is the revised welding strength margin, M'_2 is the revised welding uniformity margin, k is the correction coefficient (e.g., set to 0.2 as needed), and D, D₂ are fatigue life evaluation parameters. Accordingly, the larger the fatigue life evaluation parameter, the larger the revised welding strength and uniformity margins will be, thereby enhancing the influence of fatigue performance on the comprehensive evaluation index.

Specifically, the present solution further considers the fatigue performance of the welded structure under cyclic loading, thereby avoiding the issue of focusing only on static strength and uniformity while neglecting fatigue life. In the application scenarios of windproof curtains under high-altitude environments, the welded connection between the zipper and the windproof curtain fabric is subjected to cyclic loads over an extended period, making fatigue failure a potential failure mode.

Therefore, by introducing steps B5 to B7, fatigue life assessment is integrated into the optimization process of the welding process parameters. As a result, the optimized welding parameters not only ensure the initial welding strength and welding uniformity of the welded joint but also enhance the fatigue life of the joint, thereby guaranteeing the long-term reliability of the welded connection.

Step B5 provides temperature and stress distribution data of the welding region, which serves as the basis for fatigue life assessment.

Step B6 uses Miner's linear cumulative damage theory and S-N curves to evaluate the fatigue life of the welded structure and quantifies the result as a fatigue life evaluation parameter.

Step B7 revises the welding strength margin and welding uniformity margin using the fatigue life evaluation parameter, allowing the subsequent comprehensive evaluation index to balance static strength, welding uniformity, and fatigue life.

Through this process, the optimized welding parameters ultimately selected can achieve an optimal balance among static strength, welding uniformity, and fatigue life. Thus, the optimization method of claim 7 yields welding parameters that enhance the durability and reliability of the connection between the zipper and the windproof curtain fabric under high-altitude conditions, reducing safety risks caused by welding failure in extreme high-rise environments.

In this embodiment, step B6 comprises:
B601. Based on the temperature and stress distributions of the welding region corresponding to each solution in the Pareto optimal solution set, extracting multiple feature points within the welding region and acquiring the stress amplitude and mean stress at each feature point under a specific cyclic load;
B602. For each feature point, calculating the equivalent stress amplitude using a modified Morrow mean stress correction algorithm, based on the stress amplitude and mean stress;
B603. Referring to the S-N curves of the materials of the connection tape 6, zipper base fabric 5, and windproof curtain fabric 7, querying the fatigue life corresponding to the calculated equivalent stress amplitude;
B604. Based on the queried fatigue life, calculating the damage index of each feature point according to Miner's linear cumulative damage theory, where the damage index is the ratio of the number of cycles under the specific cyclic load to the fatigue life;
B605. Calculating the weighted average of the damage indices of all feature points to obtain the fatigue life evaluation parameter of the welded structure; the weighting coefficient in the weighted average is inversely proportional to the distance from each feature point to the center of the welding region.

Step B6 defines the method for calculating the fatigue life evaluation parameter, aiming to provide a more precise and accurate fatigue life assessment of the welded structure. This solution considers the non-uniform temperature and stress distribution inside the welding region and innovatively proposes extracting multiple feature points within the welding zone for fatigue life assessment.

In step B601, based on the previously obtained temperature and stress distribution data of the welding region, multiple feature points are extracted, and the stress amplitude and mean stress at these feature points under cyclic loading are determined. Specifically, finite element analysis software, such as ANSYS or Abaqus, may be used to post-process the temperature and stress field data of the welding region. Positions with large temperature gradients and stress concentrations within the welding region may be identified as feature points. For example, the welding region can be meshed, and a comprehensive evaluation index for each mesh node can be calculated based on the weighted combination of its temperature gradient and stress. A number of mesh nodes with the highest evaluation indices are selected as feature points.

The number of feature points may be adjusted based on the size and shape of the welding region. For a relatively small welding region, 3-5 feature points may be selected; for a larger region, 5-10 feature points may be used.

The stress amplitude and mean stress may be determined from the cyclic loading spectrum under actual working conditions. For example, the rainflow counting method may be used to process the cyclic load spectrum and obtain the number of cycles at different stress levels. Then, according to Miner's linear cumulative damage theory, the damage index under each stress level can be calculated. By extracting feature points, the differences in stress states at different locations within the welding region can be captured, thus providing the basis for subsequent fatigue life evaluation.

In step B602, for each feature point, the equivalent stress amplitude is calculated using the modified Morrow mean stress correction algorithm. The calculation may follow the formula: Δσeq=Δσ*(1-σm/σf')^b, where Δσeq is the equivalent stress amplitude, Δσ is the stress amplitude, σm is the mean stress, σf' is the fatigue strength coefficient, and b is the fatigue strength exponent. The modified Morrow model takes into account the influence of mean stress on fatigue life and, compared to traditional equivalent stress models, better reflects the material's fatigue behavior under cyclic loads.

In step B603, based on the S-N curve of the material, the fatigue life corresponding to the calculated equivalent stress amplitude is obtained. The S-N curve characterizes the fatigue performance of a material and describes its fatigue life under different stress levels. Specifically, based on the materials of the connection tape 6, zipper base fabric 5, and windproof curtain fabric 7, relevant material handbooks or fatigue databases can be consulted to obtain S-N curve data. The S-N curve is typically presented in logarithmic coordinates, with the horizontal axis representing the stress amplitude and the vertical axis representing fatigue life. Through this curve, the fatigue life of each feature point under a specific stress level can be determined.

In step B604, based on the queried fatigue life, the damage index for each feature point is calculated according to Miner's linear cumulative damage theory. Miner's theory is used to evaluate fatigue life under variable amplitude loading. The damage index is defined as the ratio of the number of cycles at a specific stress level to the corresponding fatigue life, calculated using the formula: D = n/M, where D is the damage index, n is the number of cycles at the given stress level, and M is the fatigue life. The calculated damage index quantifies the fatigue damage level at each feature point.

In step B605, the fatigue life evaluation parameter of the welded structure is obtained by performing a weighted average of the damage indices of all feature points. This weighted averaging comprehensively considers the fatigue damage of multiple feature points within the welding region, making the fatigue life evaluation parameter more representative. The weighting coefficient is inversely proportional to the distance between each feature point and the center of the welding region. This means that feature points closer to the center have a greater influence on the evaluation, which aligns with actual stress characteristics of welding structures-since stress concentrations often occur near the center and fatigue failure is more likely to initiate there.

The weighting coefficient may be defined using an inverse proportional function. For example, the weight w_i of the i-th feature point can be calculated as: w_i=C/d_i, where d_i is the distance from the i-th feature point to the center of the welding region, and C is a constant. The constant C can be set based on actual conditions, such as the average radius of the welding region.

Through the above technical solution, the present application enables a more refined and accurate evaluation of the fatigue life of the welded structure. The solution considers the non-uniformity of temperature and stress distributions within the welding region. By extracting multiple feature points within the welding region and combining the modified Morrow mean stress correction algorithm, S-N curves, and Miner's linear cumulative damage theory, a refined fatigue life assessment of the welded structure is achieved. This overcomes the generalization defects of traditional evaluation methods, resulting in fatigue life evaluation outcomes that are more accurate and reliable, thereby providing guidance for the structural design and optimization of windproof curtains in high-rise building high-altitude environments.

In some embodiments, step A4 comprises:
A401. Real-time acquisition of welding current, welding voltage, welding power, and vibration amplitude of the welding horn from the ultrasonic welding equipment, and storage of the collected data;
A402. Calculating the energy input curve during the welding process based on the stored welding current, welding voltage, welding power, and welding horn vibration amplitude data;
A403. Comparing the energy input curve with a preset energy input threshold range to determine whether the welding process is stable;
A404. If the welding process is determined to be unstable, adjusting the welding frequency, welding pressure, welding time, and welding amplitude of the ultrasonic welding equipment using a PID control algorithm, based on the deviation of the energy input curve from the threshold range, so as to restore the energy input curve within the preset range.

In step A401, the real-time acquisition of welding current, voltage, power, and horn vibration amplitude provides the data foundation for subsequent energy input curve calculations. Acquisition may be performed using sensors, such as current sensors, voltage sensors, power sensors, and displacement sensors for detecting welding current, welding voltage, welding power, and vibration amplitude, respectively. The data may be stored using a data logger or a computer system, in either digital or analog format.

In step A402, the energy input curve is calculated based on electrical and mechanical principles. Energy input is defined as the total energy applied to the welding region during welding and can be estimated using parameters such as welding current, voltage, time, and vibration amplitude. For example, energy input may be approximated as the product of welding voltage, welding current, and welding time (referred to as the first energy input). For greater accuracy, the effect of the welding horn's vibration amplitude may be considered. A correction coefficient can be obtained from a mapping table based on the vibration amplitude, and this coefficient is multiplied by the first energy input to obtain the final energy input. The correction coefficient mapping table may be established in advance through experiments.

In step A403, the preset threshold range for the energy input curve is determined based on empirical or experimental data and represents the acceptable fluctuation range of energy input during a stable welding process. The real-time energy input curve is compared with this range to assess whether the process deviates from the normal condition.

For example:
If the energy input curve exceeds the upper limit of the threshold range continuously for longer than a preset duration, this indicates excessive energy input, posing a risk of over-welding, and the welding process is determined to be unstable.

If the energy input curve remains below the lower limit of the threshold range for longer than the preset duration, this indicates insufficient energy input, posing a risk of under-welding, and the welding process is likewise considered unstable.

Otherwise, the process is considered stable.

In step A404, the PID control algorithm is a commonly used closed-loop control algorithm, which adjusts control deviations through proportional, integral, and derivative components. In this solution, the control deviation refers to the deviation between the actual energy input curve and the preset energy input threshold range. The PID control algorithm calculates the adjustment amounts for welding frequency, welding pressure, welding time, and welding amplitude based on the deviation, and controls the ultrasonic welding equipment to perform the corresponding adjustments, thereby restoring the energy input curve within the preset threshold range and ensuring the stability of the welding process.

For example:
If the energy input is too high, the PID controller may reduce the welding amplitude or shorten the welding time;
If the energy input is too low, the PID controller may increase the welding pressure or raise the welding frequency.

Through real-time adjustment by the PID control algorithm, the energy input curve is maintained within the preset threshold range, ensuring the stability of the welding process and thereby guaranteeing the reliability of welding quality.

Referring to Fig. 2, the present application further proposes a device for optimizing the connection between a zipper and a windproof curtain fabric, which is used to optimize the welding process of the windproof curtain fabric and zipper in high-rise buildings. The device comprises:
Environmental parameter acquisition module 1, configured to acquire the characteristic ambient temperature and characteristic ultraviolet intensity in high-altitude building environments (see step A1 described above for the specific process);
Welding parameter calculation module 2, configured to calculate optimized ultrasonic welding process parameters using a dynamic ultrasonic welding parameter adjustment model based on the characteristic ambient temperature and UV intensity. The welding parameters include welding frequency, welding pressure, welding time, and welding amplitude (see step A2 above for the detailed process);
Welding control module 3, configured to control the ultrasonic welding equipment to perform welding of the connection tape 6, zipper base fabric 5, and windproof curtain fabric 7 according to the optimized welding parameters (see step A3 above for the specific process);
Welding quality monitoring module 4, configured to monitor welding process parameters in real time and adjust the ultrasonic welding parameters accordingly (refer to step A4 above for the details).

In the embodiment provided by the present application, it should be understood that the disclosed device and method may also be implemented in other ways. The device embodiment described above is merely illustrative. For example, the division of modules is based on logical function partitioning and may be realized in other forms in actual implementation. For instance, multiple modules or components may be combined or integrated into another system; Some features may be omitted or not executed; The described coupling, direct coupling, or communication connections may be realized via indirect coupling through communication interfaces, and the connections may be electrical, mechanical, or of other types.

Furthermore, the described units as separate components may or may not be physically separated; Components described as a single module may or may not be implemented as individual physical units; These components may reside in a single location or may be distributed across multiple networked nodes. Parts or all of the described modules may be selected to implement the embodiment depending on the actual needs. Additionally, in various embodiments of the present application, the functional modules may be integrated into a single independent part, or may exist separately, or two or more modules may be integrated to form one independent part.

In this disclosure, relational terms such as "first", "second", and the like are only used to distinguish one entity or action from another, and do not necessarily imply any actual relationship or order between such entities or actions.

The above descriptions are merely embodiments of the present application and are not intended to limit the scope of protection. Those skilled in the art may make various modifications and changes within the spirit and principles of this application. All such modifications, equivalent replacements, and improvements shall fall within the scope of protection of the present application.

## Claims

1. A method for optimizing the connection between a zipper and a windproof curtain fabric which optimizes the connection process of the windproof curtain fabric and the zipper on high-rise buildings, **characterized in that** the method comprises the steps of:
A1. acquiring characteristic ambient temperature and characteristic ultraviolet intensity in a high-altitude environment;
A2. utilizing a dynamic adjustment model for ultrasonic welding parameters to calculate optimized ultrasonic welding process parameters based on the characteristic ambient temperature and the characteristic ultraviolet intensity, wherein the ultrasonic welding process parameters comprise welding frequency, welding pressure, welding time, and welding amplitude;
A3. controlling an ultrasonic welding device to perform welding on the zipper base fabric and the windproof curtain fabric according to the optimized ultrasonic welding process parameters, wherein the edge seams of the zipper base fabric and the windproof curtain fabric are aligned and jointly welded to a connection tape; and
A4. monitoring welding process parameters in real time for adjusting the ultrasonic welding process parameters.

2. The method for optimizing the connection between a zipper and a windproof curtain fabric according to claim 1, **characterized in that** step A1 comprises:
A101. retrieving historical ambient temperature data and historical ultraviolet intensity data of several locations matching the geographical characteristics of the target deployment site of the tent from a high-altitude environment database, wherein the high-altitude environment database comprises historical ambient temperature data and historical ultraviolet intensity data of multiple typical high-rise building locations, and the corresponding geographical characteristics;
A102. calculating statistical characteristic parameters of ambient temperature and ultraviolet intensity for the retrieved historical data of several locations, wherein the statistical characteristic parameters comprise average value, maximum value, and minimum value;
A103. performing weighted average calculation on each statistical characteristic parameter of ambient temperature for the several locations to obtain the corresponding first weighted average statistical characteristic parameter items; performing weighted average calculation on each statistical characteristic parameter of ultraviolet intensity to obtain the corresponding second weighted average statistical characteristic parameter items; and
A104. obtaining the characteristic ambient temperature based on the synthesis of the first weighted average statistical characteristic parameter items; and obtaining the characteristic ultraviolet intensity based on the synthesis of the second weighted average statistical characteristic parameter items.

3. The method for optimizing the connection between a zipper and a windproof curtain fabric according to claim 1, **characterized in that** the dynamic adjustment model for ultrasonic welding parameters comprises a material property sub-model, a welding thermodynamics sub-model, and a welding quality evaluation sub-model; wherein
the material property sub-model is configured to calculate the elastic modulus, yield strength, and thermal expansion coefficient of the materials of the connection tape, zipper base fabric, and windproof curtain fabric under different ambient temperatures and ultraviolet intensities;
the welding thermodynamics sub-model is configured to calculate the temperature distribution and stress distribution in the welding region during the ultrasonic welding process; and
the welding quality evaluation sub-model is configured to evaluate the welding strength and welding uniformity of the welding region.

4. The method for optimizing the connection between a zipper and a windproof curtain fabric according to claim 3, **characterized in that** step A2 comprises:
A201. calculating the elastic modulus, yield strength, and thermal expansion coefficient of the connection tape, zipper base fabric, and windproof curtain fabric using the material property sub-model based on the characteristic ambient temperature and characteristic ultraviolet intensity;
A202. inputting the elastic modulus, yield strength, and thermal expansion coefficient of the connection tape, zipper base fabric, and windproof curtain fabric into the welding thermodynamics sub-model to calculate the temperature distribution and stress distribution in the welding region under different combinations of welding frequency, welding pressure, welding time, and welding amplitude;
A203. inputting the temperature distribution and stress distribution in the welding region into the welding quality evaluation sub-model to calculate the welding strength and welding uniformity under different combinations of welding frequency, welding pressure, welding time, and welding amplitude; and
A204. based on the welding strength and welding uniformity under different combinations of welding frequency, welding pressure, welding time, and welding amplitude, performing multi-objective optimization with the objectives of maximizing welding strength and optimizing welding uniformity to obtain the optimized welding frequency, optimized welding pressure, optimized welding time, and optimized welding amplitude.

5. The method for optimizing the connection between a zipper and a windproof curtain fabric according to claim 4, **characterized in that** step A204 comprises:
B1. solving for the welding strength and welding uniformity under different combinations of welding frequency, welding pressure, welding time, and welding amplitude using the NSGA-II algorithm to obtain a Pareto optimal solution set, wherein each solution in the Pareto optimal solution set corresponds to one combination of welding frequency, welding pressure, welding time, and welding amplitude;
B2. acquiring the welding strength and welding uniformity corresponding to each solution in the Pareto optimal solution set to calculate the corresponding welding strength margin and welding uniformity margin, wherein the welding strength margin is the ratio of welding strength to a preset welding strength threshold, and the welding uniformity margin is the ratio of welding uniformity to a preset welding uniformity threshold;
B3. performing a weighted summation of the welding strength margin and welding uniformity margin corresponding to each solution in the Pareto optimal solution set to obtain a comprehensive evaluation index; and
B4. selecting the solution with the highest comprehensive evaluation index in the Pareto optimal solution set as the optimized welding frequency, optimized welding pressure, optimized welding time, and optimized welding amplitude.

6. The method for optimizing the connection between a zipper and a windproof curtain fabric according to claim 5, **characterized in that** step B1 comprises:
B101. initializing a population of the NSGA-II algorithm for different combinations of welding frequency, welding pressure, welding time, and welding amplitude, wherein the population serves as the initial parent population, and the population size is set to N, where N is a preset positive integer;
B102. for each set of welding parameter combinations, calculating the corresponding welding strength and welding uniformity using the dynamic adjustment model for ultrasonic welding parameters, and calculating the corresponding fitness value based on the welding strength and welding uniformity;
B103. performing selection, crossover, and mutation operations based on the fitness values of each welding parameter combination to generate a new population as the offspring population, wherein the selection operation adopts the binary tournament selection method, the crossover operation adopts the simulated binary crossover method, and the mutation operation adopts the polynomial mutation method, with the mutation probability adjusted according to ambient temperature and air pressure such that the lower the temperature and the smaller the pressure, the higher the mutation probability;
B104. merging the parent population and the offspring population, performing non-dominated sorting, calculating the crowding distance of each solution, and selecting the top N solutions based on non-dominated rank and crowding distance as the new parent population; and
B105. determining whether the maximum number of iterations has been reached, and if so, outputting the latest parent population as the Pareto optimal solution set; otherwise, returning to step B102.

7. The method for optimizing the connection between a zipper and a windproof curtain fabric according to claim 6, **characterized in that** step B 104 comprises:
performing non-dominated sorting on the merged population to obtain multiple non-dominated levels;
for the solutions within the same non-dominated level, respectively calculating the objective differences between each solution and its adjacent solutions, and using the sum of objective differences of each solution as its crowding distance, wherein the objective differences comprise the welding strength difference and the welding uniformity difference;
selecting the top N solutions as the new parent population based on the non-dominated level and crowding distance using an elitism strategy.

8. The method for optimizing the connection between a zipper and a windproof curtain fabric according to claim 5, **characterized in that**, after step B2 and before step B3, further comprises:
B5. acquiring the temperature distribution and stress distribution of the welding region corresponding to each solution in the Pareto optimal solution set;
B6. based on the welding strength, welding uniformity, and the temperature and stress distribution of the welding region corresponding to each solution in the Pareto optimal solution set, calculating the fatigue life evaluation parameter of the welded structure under a specific cyclic load using Miner's linear cumulative damage theory; and
B7. correcting the welding strength margin and welding uniformity margin based on the fatigue life evaluation parameter.

9. The method for optimizing the connection between a zipper and a windproof curtain fabric according to claim 8, **characterized in that** step B6 comprises:
B601. extracting multiple feature points within the welding region based on the temperature distribution and stress distribution of the welding region corresponding to each solution in the Pareto optimal solution set, and obtaining the stress amplitude and mean stress of each feature point under a specific cyclic load;
B602. calculating the equivalent stress amplitude for each feature point using the modified Morrow mean stress correction algorithm based on its stress amplitude and mean stress;
B603. querying the fatigue life corresponding to the equivalent stress amplitude based on the S-N curves of the materials of the connection tape, zipper base fabric, and windproof curtain fabric;
B604. calculating the damage index of each feature point based on the queried fatigue life using Miner's linear cumulative damage theory, wherein the damage index is the ratio of the number of cycles under the specific cyclic load to the fatigue life; and
B605. calculating the fatigue life evaluation parameter of the welded structure by performing a weighted average of the damage indices of all feature points, wherein the weighting coefficient is inversely proportional to the distance between each feature point and the center of the welding region.

10. The method for optimizing the connection between a zipper and a windproof curtain fabric according to claim 1, **characterized in that** step A4 comprises:
A401. acquiring in real time the welding current, welding voltage, welding power, and vibration amplitude of the welding head of the ultrasonic welding device, and storing the acquired data;
A402. calculating the energy input curve during the welding process based on the stored welding current, welding voltage, welding power, and vibration amplitude data;
A403. comparing the energy input curve with a preset energy input threshold range to determine whether the welding process is stable; and
A404. if the welding process is unstable, adjusting the welding frequency, welding pressure, welding time, and welding amplitude of the ultrasonic welding device using a PID control algorithm based on the deviation degree of the energy input curve relative to the threshold range, such that the energy input curve returns to within the preset threshold range.

11. A device for optimizing the connection between a zipper and a windproof curtain fabric, configured to optimize the connection process between the windproof curtain fabric and the zipper on high-rise buildings, wherein the device comprises:
an environmental parameter acquisition module, configured to acquire characteristic ambient temperature and characteristic ultraviolet intensity in high-altitude environments;
a welding parameter calculation module, configured to utilize a dynamic adjustment model for ultrasonic welding parameters to calculate optimized ultrasonic welding process parameters based on the characteristic ambient temperature and the characteristic ultraviolet intensity, wherein the ultrasonic welding process parameters comprise welding frequency, welding pressure, welding time, and welding amplitude;
a welding control module, configured to control an ultrasonic welding device to perform welding of the zipper base fabric and the windproof curtain fabric according to the optimized ultrasonic welding process parameters, wherein the edge seams of the zipper base fabric and the windproof curtain fabric are aligned and jointly welded to a connection tape; and
a welding quality monitoring module, configured to monitor welding process parameters in real time for adjusting the ultrasonic welding process parameters.
